# EUROPÄISCHE PATENTANMELDUNG

(11) **EP 2 063 356 A1**
(43) Veröffentlichungstag der Anmeldung: **27.05.2009**
(21) Anmeldenummer: 07022628.7
(22) Anmeldetag: 21.11.2007
(51) Int. Cl.: G06F 9/445

(54) **Transportabler Datenträger und Verfahren zum Übertragen von Konfigurationsdaten**

(71) Anmelder: Pepperl + Fuchs GmbH, 68307 Mannheim (DE)
(72) Erfinder: Schneider, Dieter, 69126 Heidelberg (DE); Palatz, Thomas, 68167 Mannheim (DE); Piontek, Mark, 67434 Neustadt a.d. Weinstr. (DE)
(74) Vertreter: Schiffer, Axel Martin

(57) **Zusammenfassung**

Die Erfindung betrifft einen transportablen Datenträger zum Übertragen von Konfigurationsdaten, insbesondere einer Firmware, von einem externen Rechner auf einen Sensor oder ein Steuer- und Auswertegerät für Sensoren, mit einem ersten Anschlussmittel zum Verbinden des Datenträgers mit einem externen Rechner, mit einem Schreib-Lese-Speicher zum Zwischenspeichern der Konfigurationsdaten, der mit dem ersten Anschlussmittel zusammenwirkt, wobei das erste Anschlussmittel dazu eingerichtet ist, die Konfigurationsdaten von einem Speicher eines externen Rechners in den Schreib-Lese-Speicher zu übertragen und den Datenträger von dem externen Rechner aus mit elektrischer Energie zu versorgen, wenn der Datenträger mit dem externen Rechner verbunden ist. Der transportable Datenträger ist dadurch gekennzeichnet, dass zum Verbinden des Datenträgers mit einem Sensor oder einem Steuer- und Auswertegerät ein separates zweites Anschlussmittel vorhanden ist, welches mit dem Schreib-Lese-Speicher zusammenwirkt, dass das zweite Anschlussmittel dazu eingerichtet ist, die Konfigurationsdaten von dem Schreib-Lese-Speicher in einen Speicher eines Sensor oder eines Steuer- und Auswertegeräts zu übertragen und den Datenträger von einem Sensor oder von einem Steuer- und Auswertegerät aus mit elektrischer Energie zu versorgen, wenn der Datenträger mit dem Sensor oder mit dem Steuer- und Auswertegerät verbunden ist. Die Erfindung betrifft außerdem ein Verfahren zum Übertragen von Konfigurationsdaten von einem externen Rechner auf einen Sensor oder ein Steuer- und Auswertegerät für Sensoren.

## Beschreibung

Die vorliegende Erfindung betrifft in einem ersten Aspekt einen transportablen Datenträger zum Übertragen von Konfigurationsdaten, insbesondere einer Firmware, von einem externen Rechner auf einen Sensor oder ein Steuer- und Auswertegerät für Sensoren nach dem Oberbegriff des Anspruchs 1.

In einem zweiten Gesichtspunkt bezieht sich die Erfindung auf ein Verfahren zum Übertragen von Konfigurationsdaten von einem externen Rechner auf einen Sensor oder ein Steuer- und Auswertegerät für Sensoren.

Ein gattungsgemäßer transportabler Datenträger, beispielsweise ein herkömmlicher USB-Stick, weist ein Anschlussmittel zum Verbinden des Datenträgers mit einem externen Rechner auf sowie außerdem einen Schreib-Lese-Speicher zum Zwischenspeichern der Konfigurationsdaten, der mit dem Anschlussmittel zusammenwirkt, wobei das Anschlussmittel dazu eingerichtet ist, die Konfigurationsdaten von einem Speicher eines externen Rechners in den Schreib-Lese-Speicher zu übertragen und den Datenträger von dem externen Rechner aus mit elektrischer Energie zu versorgen, wenn der Datenträger mit dem externen Rechner verbunden ist.

Über den einfachen Nachweis einer Messgröße hinaus weisen Sensoren und/oder Steuer- und Auswertegeräte für Sensoren heute umfangreiche und variabel einzustellende Funktionalitäten auf. Hierzu ist in den Sensoren oder den Steuer- und Auswertegeräten typischerweise ein Mikrocontroller vorhanden, wobei es sich prinzipiell um vollwertige Rechner mit CPU, Speicher und entsprechenden Schnittstellen handelt. Zum Bereitstellen der gewünschten Abläufe und Funktionen werden an diese Mikrocontroller die entsprechenden Programmcodes übermittelt und außerdem müssen in der Regel eine Vielzahl von Parametereinstellungen vorgenommen werden. Die dabei eingesetzte Spezialsoftware, welche bis zu einigen Megabyte groß sein kann, für die Endgeräte wird auch als Firmware bezeichnet. Beispielsweise kann für einen Sensor eingestellt werden, auf welches Ausgangsspannungsintervall eine physikalische Messgröße abgebildet wird, es können zeitliche Abstände von Messungen festgelegt oder es kann bestimmt werden, ob Mittelwerte, Minima und/oder Maxima ermittelt und ausgegeben werden. Schließlich werden in einer Firmware oder entsprechenden Parameter- und Konfigurationseinstellungen auch Details einer Kommunikation des Sensors oder eines Steuer- und Auswertegeräts mit der Außenwelt, beispielsweise also mit einer speicherprogrammierbaren Steuerung oder einem Bussystem, festgelegt.

Um den Transfer der Programm- und Konfigurationsdaten, insbesondere also der Firmware, zu bewerkstelligen, müssen bisher die Sensoren oder die Steuer- und Auswertegeräte für die Sensoren typischerweise über eine serielle Schnittstelle oder einen Netzwerkanschluss mit einem PC verbunden werden. Zumeist ist hierbei ein Schnittstellenwandler mit separatem eigenem Netzteil erforderlich. Der Download erfolgt hierbei in einem speziellen Datenformat. Der Schnittstellenwandler wird auch als Download-Gerät bezeichnet. Es ist demgemäß aufwändig, bei Sensoren oder Steuer- und Auswertegeräten für Sensoren, die bereits am konkreten Einsatzort positioniert sind, Parameteränderungen durchzuführen oder eine aktuelle Version einer Firmware aufzuspielen. Insbesondere ist hierfür eine Mehrzahl von Geräten notwendig.

Eine **Aufgabe** der Erfindung ist es, eine Vorrichtung und ein Verfahren bereitzustellen, mit welchen der Transfer von Konfigurationsdaten von einem externen Rechner auf einen Sensor oder ein Steuer- und Auswertegerät für Sensoren vereinfacht wird.

Diese Aufgabe wird in einem ersten Gesichtspunkt der Erfindung durch den transportablen Datenträger mit den Merkmalen des Anspruchs 1 gelöst.

In einem zweiten Gesichtspunkt wird die Aufgabe durch das Verfahren mit den Merkmalen des Anspruchs 11 gelöst.

Bevorzugte Ausgestaltungen des erfindungsgemäßen transportablen Datenträgers und vorteilhafte Varianten des erfindungsgemäßen Verfahrens sind Gegenstand der abhängigen Ansprüche und sind außerdem in der Beschreibung, insbesondere im Zusammenhang mit der Figur, beschrieben.

Der transportable Datenträger der oben genannten Art ist erfindungsgemäß dadurch weitergebildet, dass zum Verbinden des Datenträgers mit einem Sensor oder einem Steuer- und Auswertegerät ein separates zweites Anschlussmittel vorhanden ist, welches mit dem Schreib-Lese-Speicher zusammenwirkt, dass das zweite Anschlussmittel dazu eingerichtet ist, die Konfigurationsdaten von dem Schreib-Lese-Speicher in einen Speicher eines Sensor oder eines Steuer- und Auswertegeräts zu übertragen und den Datenträger von einem Sensor oder von einem Steuer- und Auswertegerät aus mit elektrischer Energie zu versorgen, wenn der Datenträger mit dem Sensor oder mit dem Steuer- und Auswertegerät verbunden ist.

Bei dem erfindungsgemäßen Verfahren wird ein transportabler Datenträger, welcher einen Schreib-Lese-Speicher aufweist, über ein erstes Anschlussmittel mit einem externen Rechner verbunden. Die Konfigurationsdaten werden über das erste Anschlussmittel in den Schreib-Lese-Speicher des Datenträgers übertragen, der Datenträger wird über ein separates zweites Anschlussmittel mit einem Sensor oder einem Steuer- und Auswertegerät verbunden und die Konfigurationsdaten werden von dem Datenträger über das zweite Anschlussmittel auf den Sensor oder das Steuer- und Auswertegerät übertragen. Dabei wird der Datenträger von dem externen Rechner aus über das erste Anschlussmittel mit elektrischer Energie versorgt, wenn der Datenträger mit dem externen Rechner verbunden ist, und der Datenträger wird von dem Sensor oder von dem Steuer- und Auswertegerät aus über das zweite Anschlussmittel mit elektrischer Energie versorgt, wenn der Datenträger mit dem Sensor oder mit dem Steuer- und Auswertegerät verbunden ist.

Als ein Kerngedanke der Erfindung kann angesehen werden, zum Übertragen der Konfigurationsdaten auf eine direkte Verbindung mit einem externen Rechner zu verzichten und stattdessen einen transportablen Datenträger einzusetzen.

Insbesondere soll es sich bei dem transportablen Datenträger um einen manuell transportablen Datenträger handeln, also ein Gerät, welches bequem von einem Benutzer an den jeweiligen Einsatzort mitgenommen werden kann.

Als weiterer Kerngedanke der Erfindung kann erachtet werden, diesen transportablen Datenträger mit einem speziellen zweiten Anschlussmittel zu versehen, welches so gestaltet ist, dass der Datenträger mit diesem zweiten Anschlussmittel mit dem Sensor oder dem Steuer- und Auswertegerät verbunden werden kann und dass über dieses zweite Anschlussmittel die Konfigurationsdaten von dem Schreib-Lese-Speicher des Datenträgers an den Sensor oder das Steuer- und Auswertegerät übertragen werden können.

Als ein wesentlicher Vorteil der Erfindung kann angesehen werden, dass insbesondere in komplexen industriellen Umgebungen Firmware-Updates oder Parameteraktualisierungen besonders rasch durchgeführt werden können, da man im Wesentlichen nur den transportablen Datenträger mit dem Sensor oder dem Steuer- und Auswertegerät verbinden muss.

Ein weiterer grundlegender Gedanke der Erfindung kann darin gesehen werden, dass der transportable Datenträger nicht mit einer eigenen Spannungsversorgung ausgerüstet wird, sondern jeweils von dem externen Rechner oder dem Sensor bzw. dem Steuer- und Auswertegerät mit elektrischer Energie versorgt wird, wenn er mit diesen Komponenten verbunden ist. Dies ermöglicht besonders kompakte Bauformen des transportablen Datenträgers und dessen Handhabbarkeit wird hierdurch erhöht.

Mit der Erfindung wird demgemäß der Download einer Gerätefirmware deutlich vereinfacht. Insbesondere ist hierzu, beispielsweise in einer Fertigungsanlage, kein zusätzlicher Rechner und keine zusätzliche Energieversorgung notwendig.

Bei den Sensoren kann es sich grundsätzlich um jede Art von Sensoren für die Automatisierungstechnik zum Nachweis einer physikalischen Messgröße oder zum Nachweis von Gegenständen oder Objekten handeln. Besonders vorteilhaft kann die vorliegende Erfindung für Sensoren im industriellen Bereich, etwa induktive, kapazitive oder optische Sensoren, Temperatur- oder Drucksensoren eingesetzt werden. Zum Beispiel kann es sich auch um Identifizierungssensoren, etwa RFID-Leseköpfe, handeln und die Erfindung kann ebenso eingesetzt werden, um an ein Steuer- und Auswertegerät für eine Vielzahl solcher RFID-Leseköpfe, oder an die RFID-Leseköpfe selbst die notwendigen Programm- und Konfigurationsdaten zu übertragen.

Unter dem Begriff des Konfigurierens soll für die vorliegende Beschreibung jede softwaremäßige Veränderung oder Einstellung eines Sensors verstanden werden. Dies umfasst insbesondere jegliche Übertragung von Programm- oder Binärcode an den Sensor sowie das Aufspielen einer Firmware und das Ändern und/oder Hinzufügen von Parametern. Entsprechend soll der Begriff der Konfigurationsdaten verstanden werden, so dass hierunter jegliche softwaremäßige Daten zu verstehen sein sollen, die an den Sensor oder den Datenträger übermittelt werden.

Der Konfigurationsmodus beinhaltet jedenfalls einen Konfigurationsvorgang, der grundsätzlich auch während des Messbetriebs erfolgen kann. Konfigurationsmodus und Betriebsmodus können sich demgemäß zeitlich überlappen, also gleichzeitig eingenommen werden.

Unter einem Anschlussmittel sollen für die vorliegende Beschreibung diejenigen Komponenten verstanden werden, welche notwendig sind, um zwischen dem Datenträger und dem Sensor bzw. dem Steuer- und Auswertegerät eine schnittstellenmäßige Verbindung, also eine Datenverbindung, zu etablieren. Darüber hinaus muss diese schnittstellenmäßige Verbindung auch in der Lage sein, elektrische Energie zum Versorgen des transportablen Datenträgers zu übertragen. Grundsätzlich kann dies auch drahtlos, beispielsweise über Funk, erfolgen. Bei zweckmäßigen Ausgestaltungen des erfindungsgemäßen Datenträgers sind jedoch geeignete Steckverbindungen an dem Datenträger vorgesehen, über welche sowohl Daten als auch elektrische Energie geleitet werden kann.

Der Datentransfer zwischen dem transportablen Datenträger und dem Sensor oder dem Steuer- und Auswertegerät kann grundsätzlich auf Grundlage jedes beliebigen Protokolls erfolgen. Besonders bevorzugt werden die Schnittstellen und Protokolle benutzt, mit welchen der Sensor oder das Steuer- und Auswertegerät ohnehin arbeiten. Zweckmäßig erfolgt deshalb ein Datentransfer zwischen dem Datenträger und dem Sensor oder dem Steuer- und Auswertegerät über eine serielle Schnittstelle, insbesondere eine RS-232- oder eine RS-485-Schnittstelle.

Die Sensoren oder das Steuer- und Auswertegerät als solche können so vollständig unverändert bleiben, da bereits vorhandene Steckverbindungen genutzt werden können.

Bei einer besonders bevorzugten Ausgestaltung weist das erste und/oder das zweite Anschlussmittel des Datenträgers demgemäß einen Steckeranschluss auf, welcher beispielsweise mit einem Steckverbinder des Sensors oder des Steuer- und Auswertegeräts zusammenpasst. Bevorzugt wird der erfindungsgemäße Datenträger an einen als Diagnoseschnittstelle bezeichneten Anschluss des Steuer- und Auswertegeräts oder eines Sensors, sofern dort ein solcher Diagnoseanschluss vorhanden ist, angeschlossen.

Besonders bevorzugt werden als Steckverbinder für Sensoren in der Automatisierungstechnik dichtende Rundsteckverbinder eingesetzt. Hierbei kann es sich beispielsweise um 4- oder 5-polige Steckverbinder, insbesondere um V1- oder V3-Steckverbinder, handeln.

Vorteilhaft ist weiterhin, wenn auch für den Datentransfer zwischen dem externen Rechner und dem transportablen Datenträger auf Standardschnittstellen des Rechners zurückgegriffen wird. Besonders bevorzugt erfolgt deshalb ein Datentransfer zwischen dem erfindungsgemäßen Datenträger und dem externen Rechner über eine USB- oder eine Fire-Wire-Schnittstelle. Hierbei kann es sich auch um Varianten und Fortentwicklungen von USB-Schnittstellen handeln. Entsprechend weist das erste Anschlussmittel des Datenträgers zweckmäßig einen USB-Steckverbinder auf.

Erfindungsgemäß wird der transportable Datenträger, je nachdem wo er angeschlossen ist, über den externen Rechner oder ein Steuer- und Auswertegerät für Sensoren, in einem Ausnahmefall über einen Sensor selbst, mit Spannung versorgt.

Der erfindungsgemäße transportable Datenträger kann demnach nur dann in der erfindungsgemäßen Weise mit einem externen Rechner, einem Sensor oder einem Steuer- und Auswertegerät für Sensoren zusammenwirken, wenn von den genannten Komponenten jeweils eine Spannungsversorgung bereitgestellt werden kann. Im Fall eines externen Rechners ist dies, beispielsweise über eine USB-Schnittstelle, der Fall. Eine Spannungsversorgung ist zumeist ebenfalls möglich über ein Steuer- und Auswertegerät für Sensoren, da solche Geräte im Regelfall ein eigenes Netzteil oder jedenfalls eine Mehrzahl von Anschlüssen, insbesondere einen Diagnoseanschluss, aufweisen und deshalb nicht von dem Anschlussgerät getrennt werden müssen.

Grundsätzlich kann es sich bei dem Anschlussgerät um ein Relais, eine sonstige Schalt- oder Steuereinrichtung, ein Speise- oder Auswertegerät oder auch um ein Bussystem handeln. In den häufigsten Fällen wird der Sensor im Betriebsmodus mit einer speicherprogrammierbaren Steuerung als Anschlussgerät verbunden.

Ein einzelner Sensor weist jedoch häufig nur einen einzigen Steckverbinder, beispielsweise einen dichtenden Rundsteckverbinder, auf, über den der Sensor im Betrieb über ein Anschlussgerät mit Strom versorgt wird. Ein solcher Sensor könnte demnach den erfindungsgemäßen transportablen Datenträger nicht seinerseits mit elektrischer Energie versorgen. Sofern jedoch der Sensor beispielsweise zwei Anschlüsse aufweist und demgemäß nicht von seiner eigenen Spannungsversorgung getrennt werden muss, ist der Einsatz mit dem erfindungsgemäßen Datenträger in der oben beschriebenen Weise möglich.

In einem Hauptgesichtspunkt betrifft die Erfindung die Übertragung von Programm- und Konfigurationsdaten von dem erfindungsgemäßen Datenträger auf ein daran angeschlossenes Steuer- und Auswertegerät oder, im weniger häufigen Fall, auch direkt an einen Sensor. Grundsätzlich ist aber auch möglich, dass der Datenträger an einem Steuer- und Auswertegerät angeschlossen ist und dass die Konfigurationsdaten an Sensoren übertragen werden, welche an diesem Steuer- und Auswertegerät angeschlossen sind.

Grundsätzlich ist auch möglich, dass der Sensor oder das Steuer- und Auswertegerät eine Batterie oder einen Akkumulator beinhaltet, welcher im laufenden Betrieb über ein Anschlussgerät jeweils kontinuierlich nachgeladen wird und welcher auch die zeitweilige Versorgung des erfindungsgemäßen Datenträgers übernehmen könnte. In diesem Fall kann der erfindungsgemäße Datenträger an denselben Steckeranschluss aufgesteckt werden, über welche der Sensor oder das Steuer- und Auswertegerät im laufenden Betrieb mit einem Anschlussgerät verbunden ist.

Damit der transportable Datenträger geeignet mit einem Sensor oder einem Steuer- und Auswertegerät kommunizieren kann, ist außerdem von Vorteil, wenn eine elektronische Einrichtung vorhanden ist zum Identifizieren einer Schnittstelle an dem Sensor oder dem Steuer- und Auswertegerät, wenn der Datenträger an dem Sensor oder dem Steuer- und Auswertegerät angeschlossen ist.

Zweckmäßigerweise sind dann außerdem geeignete Mittel vorhanden, damit der Sensor zwischen mehreren Schnittstellenprotokollen, etwa RS-232 und RS-485, wechseln kann.

Bei einer weiteren bevorzugten Variante ist der Datenträger insgesamt als Schnittstellenadapter ausgebildet. Im Vergleich zum Stand der Technik benötigt der so gebildete Schnittstellenadapter keine eigene Spannungsversorgung.

Um Konflikte, beispielsweise zwischen einem externen Rechner und einem Steuer- und Auswertegerät, an welche der als Schnittstellenwandler arbeitende Datenträger gleichzeitig angeschlossen ist, und Beschädigungen des externen Rechners oder des Steuer- und Auswertegeräts zu vermeiden, ist es von Vorteil, wenn der transportable Datenträger außerdem eine elektronische Einrichtung aufweist, zum Feststellen, ob der Datenträger mit einem Rechner und/oder mit einem Sensor oder mit einem Steuer- und Auswertegerät verbunden ist. Diese elektronische Einrichtung kann sowohl an den fraglichen Anschlüssen anliegende Spannungspegel und ergänzend oder alternativ auch dort vorhandene Datensignale bei der Prüfung, an welches Gerät oder an welche Geräte der Datenträger angeschlossen ist, berücksichtigten.

Der Schutz gegen eine Beschädigung eines an dem Datenträger angeschlossenen Sensors, eines Steuer- und Auswertegeräts oder eines externen Rechners kann außerdem verbessert werden, wenn das erste Anschlussmittel und das zweite Anschlussmittel, insbesondere mit Hilfe von Optokopplern, galvanisch getrennt sind.

Bei einer weiteren bevorzugten Variante weist der transportable Datenträger optische Anzeigemittel, insbesondere Leuchtdioden, auf, um Funktionszustände des Datenträgers anzuzeigen. Beispielsweise kann eine gelbe Leuchtdiode vorhanden sein, welche, etwa durch Blinken, einen aktiven Download-Zustand anzeigt. Weiterhin kann eine Duo-Leuchtdiode grün leuchten, wenn eine geeignete Versorgungsspannung anliegt oder rot leuchten, wenn ein Fehler vorliegt.

Ein Datendownload kann für einen Nutzer sehr komfortabel gestaltet werden, wenn eine Übertragung der Konfigurationsdaten von einem externen Rechner auf den Datenträger automatisch erfolgt, nachdem der Datenträger mit dem externen Rechner verbunden wird und/oder wenn eine Übertragung der Konfigurationsdaten von dem Datenträger auf einen Sensor oder ein Steuer- und Auswertegerät automatisch erfolgt, wenn der Datenträger mit dem Sensor oder mit dem Steuer- und Auswertegerät verbunden wird. Der Datentransfer vom Rechner auf den Datenträger beziehungsweise vom Datenträger auf den Sensor kann jeweils auch nach einfacher Bestätigung durch einen Benutzer, also durch minimale Benutzerinteraktion, beispielsweise durch Tastendruck, gestartet werden.

Um sicherzustellen, dass das Steuer- und Auswertegerät oder der Sensor nach der Datenübertragung funktionstüchtig ist, können außerdem vor und/oder nach dem Übertragen der Konfigurationsdaten auf den Sensor oder das Steuer- und Auswertegerät Funktions-, Plausibilitäts- und/oder Konsistenztests des Sensors oder des Steuer- und Auswertegerät durchgeführt werden.

Der erfindungsgemäße Datenträger kann grundsätzlich mit einer auf einem externen Rechner laufenden Konfigurationssoftware zusammenwirken

Eine Konfigurierung des Sensors oder des Steuer- und Auswertegeräts oder ein Ändern von Parametern kann aber unabhängig von dem konkret eingesetzten externen Rechner erfolgen, wenn auf dem transportablen Datenträger eine Konfigurationssoftware gespeichert ist, welche bei Verbindung des Datenträgers mit dem Steuer- und Auswertegerät oder dem Sensor und dem externen Rechner, insbesondere automatisch, auf dem externen Rechner gestartet wird. Dabei kann mit der Konfigurationssoftware durch einen Benutzer am externen Rechner oder auch automatisch eine Konfigurierung durchgeführt werden.

Ein wesentlicher Vorteil dieser Weiterbildung kann darin gesehen werden, dass keine CDs, DVDs oder ähnliche Datenträger, auf welchen die nötige Parametrier- oder Konfigurierungssoftware abgelegt ist, mitgeliefert werden müssen. Schließlich kann hierbei die Notwendigkeit für den Anwender entfallen, auf einem externen Rechner Software zu installieren. Vorteilhaft ist dabei außerdem, dass auf vorhandene Hardware und insbesondere betriebssystemunabhängige Software zurückgegriffen werden kann.

Sofern Einstellungen des externen Rechners ein völlig automatisches Starten der Konfigurationssoftware nicht zulassen, kann bevorzugt vorgesehen sein, dass zum Start der Konfigurationssoftware jedenfalls nur eine minimale Benutzerinteraktion, beispielsweise also nur ein einmaliges Bestätigen durch Drücken der ENTER-Taste, erforderlich ist.

Die Konfigurationssoftware kann auf dem erfindungsgemäßen Datenträger grundsätzlich als ausführbarer Code gespeichert sein. Um eine größere Unabhängigkeit von dem konkret eingesetzten externen Rechner zu erzielen, ist die Konfigurationssoftware besonders bevorzugt plattformunabhängig ausführbar. Beispielsweise kann die Konfigurationssoftware auch als interpretierbarer Code abgespeichert sein.

Für diese Situation kann außerdem zweckmäßig sein, wenn ein schreibgeschützter Speicherbereich auf dem Datenträger vorhanden ist. Beispielsweise kann hierin ein Benutzerhandbuch abgespeichert sein.

Es kann auch vorgesehen sein, dass der externe Rechner, nachdem der erfindungsgemäße Datenträger dort angeschlossen wurde, veranlasst wird, eine Netzwerkverbindung herzustellen und dass anschließend geprüft wird, ob die Programmdateien auf dem Datenträger den aktuellen Versionen entsprechen. Hierbei können aktuelle Versionen eines Benutzerhandbuchs oder der Programmdateien auf den Datenträger geladen werden.

Zur Realisierung der oben genannten Funktionalitäten weist der Datenträger bevorzugt einen oder mehrere Mikrocontroller, FPGAs, CPLDs, GALs oder andere programmierbare Logik-Komponenten und gegebenenfalls zugeordnete Speicherbausteine auf.

Der transportable Datenträger insgesamt kann bevorzugt in einem Gehäuse in der Art eines USB-Sticks untergebracht sein. Ein solches Gehäuse ist handlich und kann bequem auch in schwer zugänglichen industriellen Umgebungen an die entsprechenden Geräte herangebracht werden.

Weitere Vorteile und Merkmale der vorliegenden Erfindung werden nachstehend mit Bezug auf die beigefügte Zeichnung erläutert. Hierin zeigt:

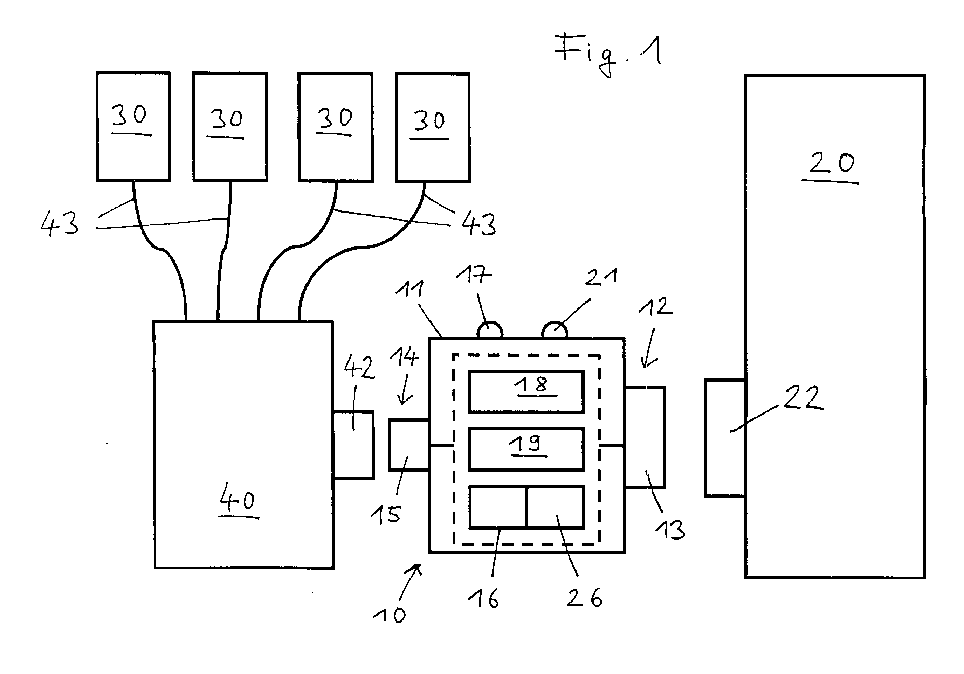

- Fig. 1:: in schematischer Darstellung ein Ausführungsbeispiel eines erfindungsgemäßen transportierbaren Datenträgers.

Figur 1 zeigt schematisch ein Ausführungsbeispiel eines erfindungsgemäßen transportablen Datenträgers 10, der in einem Kunststoffgehäuse 11 in der Art eines USB-Sticks untergebracht ist.

Als wesentliche Bestandteile weist der transportable Datenträger 10 ein erstes Anschlussmittel 12 mit einem USB-Steckverbinder 13, ein zweites Anschlussmittel 14 mit einem Steckverbinder 15 sowie einen Schreib-Lese-Speicher 16 auf, der sowohl mit dem ersten Anschlussmittel 12 als auch mit dem zweiten Anschlussmittel 14 zusammenwirkt.

Außerdem ist ein schreibgeschützter Bereich 26 des Speichers 16 vorgesehen, in dem beispielsweise ein Handbuch abgelegt werden kann. Die Speichergröße des Speichers 16, 26 beträgt bevorzugt mehr als 32 Megabyte.

Mit Hilfe des USB-Steckverbinders 13 kann der transportable Datenträger 10 mit einer USB-Schnittstelle 22 eines externen Rechners 20 verbunden werden. Ein Anschluss an ein Steuer- und Auswertegerät 40, wobei es sich beispielsweise um ein Basisgerät für ein RFID-Identifizierungssystem handeln kann, erfolgt mit dem Steckverbinder 15 an einen Anschluss 42 des Steuer- und Auswertegeräts 40. Beispielsweise ist der Anschluss 42 ein Diagnoseanschluss des RFID-Basisgerät. Insbesondere kann es sich hierbei um bekannte dichtende Rundsteckverbinder, beispielsweise V1- oder V3-Stecker, handeln. Die Datenübertragung zwischen dem Steckverbinder 16 und dem Anschluss 42 erfolgt bevorzugt über eine serielle Schnittstelle.

An das Steuer- und Auswertegerät 40 sind jeweils über Verbindungsleitungen 43 eine Mehrzahl von Sensoren 30, beispielsweise RFID-Leseköpfe, angeschlossen.

Zur Funktionsanzeige weist der transportable Datenträger 10 eine gelbe Leuchtdiode 17 sowie eine Duo-Leuchtdiode 21 auf. Hierbei kann durch ein Blinken der gelben Leuchtdiode 17 ein aktiver Download angezeigt werden. Eine korrekt anliegende Versorgungsspannung wird durch eine grün leuchtende Duo-Leuchtdiode 21 und ein Fehler durch eine rot leuchtende Duo-Leuchtdiode 21 signalisiert.

Der USB-Steckverbinder 13 und der Steckverbinder 15, sind galvanisch über Optokoppler getrennt.

Mit Hilfe einer elektronische Einrichtung 18 kann ermittelt werden, ob der transportable Datenträger 10 an dem Rechner 20 und/oder an dem Steuer- und Auswertegerät 40 angeschlossen ist. Auf diese Weise kann sichergestellt werden, dass bei gleichzeitigem Anschluss an den Rechner 20 und das Basisgerät 40 die Geräte nicht beschädigt werden.

Weiterhin ist eine elektronische Einrichtung 19 vorgesehen, welche erkennt, welche serielle Schnittstelle an den Steckverbinder 15 angeschlossen ist. Beispielsweise kann sich die serielle Schnittstelle an dem zweiten Anschlussmittel 14 sich automatisch an eine angeschlossene Schnittstelle des Steuer- und Auswertegeräts 40, beispielsweise RS-232 oder RS-485, anpassen. Hierbei ist sicherzustellen, dass die entsprechenden Signale auf den gleichen Kontakten liegen.

Erfindungsgemäß wird eine zum Download vorgesehene Firmware und/oder entsprechende Konfigurations- oder Parameterdaten, beispielsweise mit einem Dateimanager, vom Rechner 20 direkt auf den transportablen Datenträger 10 transferiert. Hierbei kann auf Standardfunktionen eines USB-Sticks zurückgegriffen werden. Zum Abspeichern der Firmware sind im Schreib-Lese-Speicher 16 des Datenträgers 10 entsprechende Verzeichnisse angelegt.

Beim Einstecken des Datenträgers 10 in den Rechner 20 kann sich beispielsweise selbstständig und automatisch der Dateimanager auf dem Rechner 20 öffnen. Der Datenträger 10 wird demgemäß über die USB-Schnittstelle 22 als Massenspeicher erkannt und behandelt. Beispielsweise kann in einem Hauptverzeichnis ein Beschreibungstext oder ein Handbuch abgelegt sein und in einem Unterordner können für das Steuer- und Auswertegerät 40 oder für nachgeordnete Sensoren die entsprechenden Softwaretypen abgespeichert sein.

Grundsätzlich kann auch eine "Hot-Swap"-Funktion implementiert werden. Hierbei gehen die Daten auf dem Datenträger 10 nicht verloren, wenn dieser ohne korrekte Abmeldung vom Rechner 20 abgezogen wird. Für eine robust industrielle Umgebung kann dies vorteilhaft sein.

Die Übertragungsrate beim Download wird zweckmäßig so hoch wie möglich gewählt. Das erste Anschlussmittel 14 und die Schnittstelle des Steuer- und Auswertegeräts 40, über welche die Daten eingespielt werden, sind hierbei aufeinander abzustimmen.

Beim Aufstecken des transportablen Datenträgers 10 auf das Steuer- und Auswertegerät 40 wird die entsprechende Firmware automatisch auf das Steuer- und Auswertegerät 40 und/oder auf die angeschlossenen Sensoren 30, beispielsweise also die RFID-Leseköpfe, transferiert. Zur Übertragung wird hierbei ein serielles Sonderprotokoll benutzt.

Außerdem wird erfindungsgemäß der transportable Datenträger 10 beim Überspielen der Firmware vom Rechner 20 über die USB-Schnittstelle 22 des Rechners 20 mit Spannung versorgt. Entsprechend erfolgt die Energieversorgung beim Übertragen der Firmware auf das Steuer- und Auswertegerät 40 von dort über zwei Kontakte der Steckverbindung 42.

Der gezeigte transportable Datenträger 10 kann auch als Schnittstellenadapter dienen, das heißt der Datenträger 10 wird dann sowohl an den Rechner 20 als auch an das Steuer- und Auswertegerät 40 angeschlossen und über die USB-Schnittstelle 22 dann direkt mit der dem Steckverbinder 42, der auch als Diagnoseschnittstelle angesehen werden kann, mit dem Steuer- und Auswertegerät 40 kommuniziert werden.

Mit der vorliegenden Erfindung werden ein transportabler Datenträger sowie ein Verfahren zum Übertragen von Konfigurationsdaten von einem externen Rechner auf einen Sensor oder ein Steuer- und Auswertegerät für Sensoren bereitgestellt, mit welchen eine erhebliche Vereinfachung des Downloads von Gerätefirmware erreicht werden kann. Insbesondere kann ein solcher Firmware-Download weitgehend automatisiert werden und muss demgemäß nicht mehr manuell gestartet werden. Darüber hinaus kann gemäß einer wesentlichen Weiterbildung der Erfindung der Datenträger auch als Schnittstellenwandler, insbesondere als Wandler zwischen einer RS-232 und einer USB-Schnittstelle, für welchen keine separate Spannungsversorgung notwendig ist.

## Patentansprüche

1. Transportabler Datenträger zum Übertragen von Konfigurationsdaten, insbesondere einer Firmware, von einem externen Rechner (20) auf einen Sensor (30) oder ein Steuer- und Auswertegerät (40) für Sensoren (30),
insbesondere zur Durchführung des Verfahrens nach einem der Ansprüche 11 bis 16,
mit einem ersten Anschlussmittel (12) zum Verbinden des Datenträgers (10) mit einem externen Rechner (20),
mit einem Schreib-Lese-Speicher (16) zum Zwischenspeichern der Konfigurationsdaten, der mit dem ersten Anschlussmittel (12) zusammenwirkt, wobei das erste Anschlussmittel (12) dazu eingerichtet ist, die Konfigurationsdaten von einem Speicher eines externen Rechners (20) in den Schreib-Lese-Speicher (16) zu übertragen und den Datenträger (10) von dem externen Rechner (20) aus mit elektrischer Energie zu versorgen, wenn der Datenträger (10) mit dem externen Rechner (20) verbunden ist,
**dadurch gekennzeichnet,**
**dass** zum Verbinden des Datenträgers (10) mit einem Sensor (30) oder einem Steuer- und Auswertegerät (40) ein separates zweites Anschlussmittel (14) vorhanden ist, welches mit dem Schreib-Lese-Speicher (16) zusammenwirkt, dass das zweite Anschlussmittel (14) dazu eingerichtet ist, die Konfigurationsdaten von dem Schreib-Lese-Speicher (16) in einen Speicher eines Sensor (30) oder eines Steuer- und Auswertegeräts (40) zu übertragen, wenn der Datenträger (10) mit dem Sensor (30) oder mit dem Steuer- und Auswertegerät (40) verbunden ist,
**dass** das zweite Anschlussmittel (14) dazu eingerichtet ist, den Datenträger (10) von einem Sensor (30) oder von einem Steuer- und Auswertegerät (40) aus mit elektrischer Energie zu versorgen, wenn der Datenträger (10) mit dem Sensor (30) oder mit dem Steuer- und Auswertegerät (40) verbunden ist.

2. Datenträger nach Anspruch 1,
**dadurch gekennzeichnet,**
**dass** das erste und/oder das zweite Anschlussmittel (14) einen Steckeranschluss (15), beispielsweise einen dichtenden Rundsteckverbinder, aufweist, welcher bevorzugt mit einem Steckverbinder (42), insbesondere einem Steckverbinder eines Diagnoseanschlusses, des Sensors (30) oder des Steuer- und Auswertegeräts (40) zusammenpasst.

3. Datenträger nach Anspruch 1 oder 2,
**dadurch gekennzeichnet,**
**dass** das erste Anschlussmittel (12) einen USB-Steckverbinder (13) aufweist.

4. Datenträger nach Anspruch 1 bis 3,
**dadurch gekennzeichnet,**
**dass** eine elektronische Einrichtung (18) vorhanden sind zum Feststellen, ob der Datenträger (10) mit einem Rechner (20) und/oder mit einem Sensor (30) oder mit einem Steuer- und Auswertegerät (40) verbunden ist.

5. Datenträger nach einem der Ansprüche 1 bis 4,
**dadurch gekennzeichnet,**
**dass** eine elektronische Einrichtung (19) vorhanden ist zum Identifizieren einer Schnittstelle an dem Sensor (30) oder dem Steuer- und Auswertegerät (40), wenn der Datenträger (10) an dem Sensor (30) oder dem Steuer- und Auswertegerät (40) angeschlossen ist.

6. Datenträger nach einem der Ansprüche 1 bis 5,
**dadurch gekennzeichnet,**
**dass** optische Anzeigemittel, insbesondere Leuchtdioden (17, 21), vorhanden sind, um Funktionszustände des Datenträgers (10) anzuzeigen.

7. Datenträger nach einem der Ansprüche 1 bis 6,
**dadurch gekennzeichnet,**
**dass** das erste Anschlussmittel (12) und das zweite Anschlussmittel (14), insbesondere mit Hilfe von Optokopplern, galvanisch getrennt sind.

8. Datenträger nach einem der Ansprüche 1 bis 7,
welcher als Schnittstellenadapter ausgebildet ist.

9. Datenträger nach einem der Ansprüche 1 bis 8,
welcher in einem Gehäuse (11) in der Art eines USB-Stick untergebracht ist.

10. Datenträger nach Anspruch 1 bis 9,
**dadurch gekennzeichnet,**
**dass** ein schreibgeschützter Speicherbereich (26) vorhanden ist.

11. Verfahren zum Übertragen von Konfigurationsdaten, insbesondere einer Firmware, von einem externen Rechner (20) auf einen Sensor (30) oder ein Steuer- und Auswertegerät (40) für Sensoren (30)
bei dem ein transportabler Datenträger (10) insbesondere nach einem der Ansprüche 1 bis 10, welcher einen Schreib-Lese-Speicher (16) aufweist, über ein erstes Anschlussmittel (12) mit einem externen Rechner (20) verbunden wird, bei dem die Konfigurationsdaten über das erste Anschlussmittel (12) in den Schreib-Lese-Speicher (16) des Datenträgers (10) übertragen werden, bei dem der Datenträger (10) über ein separates zweites Anschlussmittel (14) mit einem Sensor (30) oder einem Steuer- und Auswertegerät (40) verbunden wird, bei dem die Konfigurationsdaten von dem Datenträger (10) über das zweite Anschlussmittel (14) auf den Sensor (30) oder das Steuer- und Auswertegerät (40) übertragen werden,
wobei der Datenträger (10) von dem externen Rechner (20) aus über das erste Anschlussmittel (12) mit elektrischer Energie versorgt wird, wenn der Datenträger (10) mit dem externen Rechner (20) verbunden ist, und
wobei der Datenträger (10) von dem Sensor (30) oder von dem Steuer- und Auswertegerät (40) aus über das zweite Anschlussmittel (12) mit elektrischer Energie versorgt wird, wenn der Datenträger (10) mit dem Sensor (30) oder mit dem Steuer- und Auswertegerät (40) verbunden ist.

12. Verfahren nach Anspruch 11,
**dadurch gekennzeichnet,**
**dass** das ein Datentransfer zwischen dem Datenträger (10) und dem externen Rechner (20) über eine USB- oder eine Fire-Wire-Schnittstelle erfolgt.

13. Verfahren nach einem der Ansprüche 11 oder 12,
**dadurch gekennzeichnet,**
**dass** das ein Datentransfer zwischen dem Datenträger (10) und dem Sensor (30) oder dem Steuer- und Auswertegerät (40) über eine serielle Schnittstelle, insbesondere eine RS-232-Schnittstelle, erfolgt.

14. Verfahren nach einem der Ansprüche 11 bis 13,
**dadurch gekennzeichnet,**
**dass** eine Übertragung der Konfigurationsdaten von einem externen Rechner (20) auf den Datenträger (10) automatisch erfolgt, nachdem der Datenträger (10) mit dem externen Rechner (20) verbunden wird und/oder
**dass** eine Übertragung der Konfigurationsdaten von dem Datenträger (10) auf einen Sensor (30) oder ein Steuer- und Auswertegerät (40) automatisch erfolgt, wenn der Datenträger (10) mit dem Sensor (30) oder mit dem Steuer- und Auswertegerät (40) verbunden wird.

15. Verfahren nach einem der Ansprüche 11 bis 14,
**dadurch gekennzeichnet,**
**dass** vor und/oder nach dem Übertragen der Konfigurationsdaten auf den Sensor (30) oder das Steuer- und Auswertegerät (40) Funktions- und/oder Konsistenztests des Sensors (30) oder des Steuer- und Auswertegeräts (40) durchgeführt werden.

16. Verfahren nach einem der Ansprüche 11 bis 15,
**dadurch gekennzeichnet,**
**dass** auf dem transportablen Datenträger (10) eine Konfigurationssoftware gespeichert ist, welche bei Verbindung des Datenträgers (10) mit dem externen Rechner (20), insbesondere automatisch, auf dem externen Rechner (20) gestartet wird.
